(19)

Europäisches Patentamt
European Patent Office
Office européen des brevets

(11) **EP 1 947 838 A2**

(12) **EUROPEAN PATENT APPLICATION**

(43) Date of publication:
**23.07.2008 Bulletin 2008/30**

(51) Int Cl.:
*H04N 1/58* (2006.01)

(21) Application number: **07120276.6**

(22) Date of filing: **08.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.01.2007 KR 20070005601**

(71) Applicant: **Samsung Electronics Co., Ltd.**
**Suwon-si,**
**Gyeonggi-do 442-742 (KR)**

(72) Inventor: **SHIN, Sang-youn**
**Seoul (KR)**

(74) Representative: **Walaski, Jan Filip et al**
**Venner Shipley LLP**
**20 Little Britain**
**London EC1A 7DH (GB)**

(54) **Image processing device and method**

(57) An image forming device includes an input unit to receive binary data for each colour being input; a generation unit to generate an synthesis window, by applying a window of a predetermined size to each of the binary data for each colour and synthesizing each window region; an image process unit to expand an image, by applying a plurality of sub windows to the synthesis window; and a control unit to detect an edge region of the expanded image, extract dots corresponding to the edge region from the binary data for each colour, and carry out reinforcement or deletion of the dots. Accordingly, the quality of an image deteriorated by colour disagreement is improved by software.

# FIG. 10A

EP 1 947 838 A2

# FIG. 10B

**Description**

The present invention relates to image processing, particularly but not exclusively to an image processing device and method that compensate for image disagreement, also referred to as image colour registration error or misalignment, and accordingly improve the quality of a printed image.

As electronic technologies are developed, peripheral devices such as printers, scanners, and the like, are widely and actively used. Specifically, as many manufacturing companies have competitively participated in printer development, laser printers have replaced dot printers and inkjet printers that were used in the past because of the considerably improved print quality and print speed and lower noise level of the laser printer. The term "laser printer" refers to a printer that uses a laser light beam modulated as an image signal to transfer an image to a photosensitive unit. Thereafter, toner is adhered to the photosensitive unit and transferred onto a printable medium (such as, for example, printing paper) to form the image on the printable medium. The toner is fixed on the printable medium by high heat and pressure.

A laser printer performs the operation of printing an image through a printing process typically divided into charging, writing, developing, transferring, fusing and the like. The term "charging" refers to a process of applying a high voltage (about 7000V) to a charger to form a negative charge on the surface of the photosensitive unit by a corona discharge. The term "writing" refers to a process of scanning the laser beam over the surface of the photosensitive unit with the negative charge to selectively neutralize or reverse the negative charge in an image-wise manner, and thus to form a latent image on the surface of the photosensitive unit. The term "developing" refers to a process of adhering toner particles with a negative charge onto the latent image on the surface of the photosensitive unit. The term "transferring" refers to a process of applying a predetermined transferring voltage to a transfer unit when a printable medium is passed between the photosensitive unit and the transfer unit, to form a positive charge on the back side of the printable medium so that the negatively charged toner particles adhered on the surface of the photosensitive unit (i.e., drum) are attracted to the printable medium. The term "fusing" refers to a process of completely fusing the toner formed on the printable medium by applying proper heat and pressure. Through these processes, an image is output to be formed on the printable medium.

Specifically, these days, colour laser printers have been widely used. A colour laser printer expresses a colour image, typically using four coloured toners, cyan (C), magenta (M), yellow (Y) and black (K), collectively referred to as "CMYK." In a colour laser printer, to print a clear image, four photosensitive units are used and a printing process is performed with respect to each colour of toner. Further, to display each coloured toner at an accurate position, an intermediate transfer belt (ITB) can be used to transfer a colour image onto a printable medium by a two-step process.

In an image forming apparatus that forms a colour image using the intermediate transfer belt, a plurality of photosensitive units and the like, each type of toner should be accurately superposed and transferred at the same position onto the printable medium. That is, in forming colour images using separate C, M, Y and K toners, at least one or more toner colours are superposed to display one image colour. To display an accurate image colour, each toner image has to be accurately transferred to an accurate position.

However, with each page that is printed, there becomes an increasing risk of image registration errors occurring. Such registration errors, or image disagreement, occurs when a position to which toner is transferred is misaligned by an operation error between transfer units. That is, when each transfer unit cannot transfer the toner at the same position, an edge part of the image is blurred. This becomes a problem in printing a black text region, since all colours of C, M, Y and K are superposed to print the black text region. However, when the image disagreement occurs, a particular colour may be prominent at an edge region of the black text, causing the text boundary to be blurred.

To prevent the aforementioned problems, a conventional technology in this field uses an automatic colour calibration function. That is, a colour calibration process is automatically performed periodically. When an image forming apparatus prints about N sheets of printed matters, and the image transferred by each transfer unit is misaligned by about X dots, the printer calibrates colours by adjusting the transfer position by the X dots regularly after printing the N sheets of prints. This is called the automatic colour calibration process. However, when the colour calibration process is performed, a lot of toner is consumed. Accordingly, the amount of used toner increases. Moreover, since a user cannot use the image forming apparatus during the period in which a colour calibration is performed, this approach may cause any inconvenience to the user.

Aspects of the present invention relate to an image forming apparatus that applies a window to binary image data in order to understand the characteristics of an image, processes an edge region of the image accordingly, compensates for image disagreement by software, and minimizes the use of memory capacity, and a method thereof.

According to an aspect of the present invention, there is provided an image forming device, comprising an input unit to receive binary data for each colour being input; a generation unit to generate an synthesis window, by applying a window of a predetermined size to each of the received binary data for each colour and synthesizing each window region; an image process unit to conditionally expand an image within the synthesis window along a directionality of the image existing within the synthesis window, by applying a plurality of sub windows to the synthesis window; and a control unit to detect an edge region of the expanded image, extract dots corresponding to the edge region from the binary data for each colour, and carry out reinforcement or deletion of the dots corresponding to the edge region. According to an aspect of the present invention, the image forming device may further comprise an image forming unit to perform an image forming operation, by using each of the binary data for each colour in which the dots corresponding to the edge region are reinforced or deleted.

According to an aspect of the present invention, the generation unit may comprise a window application unit to have each pixel constituting each of the binary data for each colour as a target pixel and apply a window of n x m in size, wherein n and m are any natural numbers, to the target pixel; and a synthesis unit to synthesize windows of the binary data for each colour, in an OR-type manner, , and to generate an synthesis window to display all pixels existing within each window of the binary data for each colour.

Further, according to an aspect of the present invention, the image process unit may comprise an operation unit to calculate a characteristic value for each of the sub windows representing the characteristic of an image existing within each of the sub windows, by applying each of the sub windows to the synthesis window; a condition storing unit to store conditions for expansion, considering the directionality depending on the characteristic value; and an expansion unit to expand the image by adding pixels in the target pixel region when it is determined that the calculated characteristic value satisfies the conditions for expansion.

In this case, according to an aspect of the present invention, the operation unit may apply first, second, third and fourth sub windows respectively positioned at each corner region of the synthesis window, a fifth sub window crossing the center of the synthesis window widthwise, and a sixth sub window crossing the center of the synthesis window lengthwise; wherein, when the number of pixels existing in one of the first, second, third and fourth sub windows is at or above a predetermined threshold number of pixels, the operation unit may calculate the characteristic value of the one of the first, second, third and fourth sub windows as '1', and when the number of pixels existing in the one of the first, second, third and fourth sub windows is below the predetermined threshold number of pixels, the operation unit may calculate the characteristic values of the one of the first, second, third and fourth sub windows as '0'; and when pixels exist at both sides of the center pixel in one of the fifth and sixth sub windows, the operation unit may calculate the characteristic value of the one of the fifth and sixth sub windows as '1', and when pixel is absent at one or both sides of the center pixel in the one of the fifth and sixth sub windows, the operation unit may calculate the characteristic value of the one of the fifth and sixth sub windows as '0'.

Further, according to an aspect of the present invention, the condition storing unit may store the conditions for expansion as follows:

1) C1 & C2 & C3 = 1
2) C3 & C4 & C5 = 1
3) C1 & C3 & C6 = 1
4) C2 & C4 & C6 = 1
5) C1 & C4 = 1
6) C2 & C3 = 1.

In the conditions for expansion, C1, C2, C3, C4, C5 and C6 respectively refer to the characteristic values of the first, second, third, fourth, fifth and sixth sub windows.

According to an aspect of the present invention, the characteristic value may be the number of pixels existing within the sub window or the distribution of the pixels existing therein.

According to an aspect of the present invention, the binary data for each colour may include C, M, Y and K colour binary data. In this case, only when a rate of K colour dots included in the edge region is at or above a predetermined threshold rate, the control unit may reinforce the dots positioned at the edge region on the K colour binary data and delete the dots positioned at the edge region on the C, M and Y colour binary data.

According to another aspect of the present invention, there is provided an image forming device, comprising an image process unit to conditionally expand an image along a directionality of the image according to synthesized colour binary data; and a control unit to detect an edge region of the expanded image, extract dots corresponding to the edge region from the colour binary data and carry out reinforcement or deletion of the dots corresponding to the edge region

According to another aspect of the present invention, there is provided an image forming method comprising generating a synthesis window, by applying a window of a predetermined size to each of binary data for each colour and synthesizing each window region; conditionally expanding an image along the directionality of the image existing in the generated synthesis window, by applying a plurality of sub windows to the synthesis window; and detecting an edge region of the expanded image, extracting dots positioned in the edge region from the binary data for each colour, and carrying out reinforcement or deletion of the extracted dots.

According to an aspect of the present invention, the image forming method may further comprise: performing an image forming operation, by using each of the binary data for each colour in which the dots positioned in the edge region are reinforced or deleted.

According to an aspect of the present invention, the generating may comprise: selecting each pixel constituting each of the binary data for each colour as a target pixel, and applying a window being n x m in size, wherein n and m are any natural numbers, to the target pixel; and synthesizing windows of the binary data for each colour, in an OR-type manner and generating an synthesis window that displays all pixels existing within each window.

According to an aspect of the present invention, the conditional expanding may comprise calculating a characteristic value representing the characteristic of an image existing within the sub windows, by applying the sub windows to the synthesis window; and expanding the image by adding pixels to the target pixel region when it is determined that the calculated characteristic value satisfies one of the conditions for expansion considering the directionality depending on the characteristic value.

According to an aspect of the present invention, the calculating of the characteristic value may comprise: applying first, second, third and fourth sub windows respectively positioned at each corner region of the synthesis window, a fifth sub window crossing a center of the synthesis window widthwise, and a sixth sub window crossing the center of the synthesis window lengthwise; calculating the characteristic values for each sub window independently, wherein, for the first, second, third and fourth sub windows, the characteristic value of a sub window is '1' when the number of pixels existing in the sub window is at or above a predetermined threshold number of pixels, and the characteristic value of the sub window is '0' when the number of pixels existing in the sub window is below the predetermined threshold number of pixels; and wherein, for the fifth and sixth sub windows, the characteristic value of a sub window is '1' when pixels exist at both sides of the center pixel in the sub window the characteristic value is '0' when all pixels are absent at one or both sides of the center pixel in the sub window.

In this case, according to an aspect of the present invention, the conditions for expansion may be as follows:

1) C1 & C2 & C3 = 1
2) C3 & C4 & C5 = 1
3) C1 & C3 & C6 = 1
4) C2 & C4 & C6 = 1
5) C1 & C4 = 1
6) C2 & C3 = 1.

In the conditions for expansion, C1, C2, C3, C4, C5 and C6 respectively refer to the characteristic values of the first, second, third, fourth, fifth and sixth sub windows. Further, according to an aspect of the present invention, the characteristic value may be the number of pixels existing within the sub window or the distribution of the pixels existing therein.

According to an aspect of the present invention, the binary data for each colour may include C, M, Y and K colour binary data. In this case, wherein, when a rate of K colour dots included in the edge region is at or above a predetermined threshold rate, the detecting may comprise reinforcing the dots positioned at the edge region on the K colour binary data and deleting the dots positioned at the edge region on the C, M and Y colour binary data.

Embodiments of the invention will now be described, by way of example, with reference to the accompanying drawings, in which:

Figure 1 is a block diagram of an image forming apparatus according to an embodiment of the present invention;
Figure 2 is a block diagram describing the image forming apparatus of Figure 1 in more detail;
Figure 3 is a schematic view illustrating a process of applying a window to binary data for each colour;
Figures 4A - 4D are schematic views of a result of applying the window to the binary data for each colour;
Figure 5 is a schematic view of a synthesis window;
Figures 6A - 6F are schematic views of a plurality of sub windows;
Figure 7 is a schematic view of a result of applying the sub windows of Figure 6 to the synthesis window of Figure 4;
Figure 8 is a schematic view of an image being expanded to a target pixel;
Figure 9A shows an image displayed by the binary data for each colour;
Figure 9B shows the expanded image data;
Figure 9C is a schematic view of an edge region of the expanded image data;
Figures 10A and 10B are schematic before and after views illustrating an example of a final image form with the edge region in which K colour dots are reinforced and the other colour dots are deleted;
Figure 11 is a flow chart describing an image forming method according to an exemplary embodiment of the present invention; and
Figure 12 is a flow chart describing a more particular example of the image forming method of Figure 11.

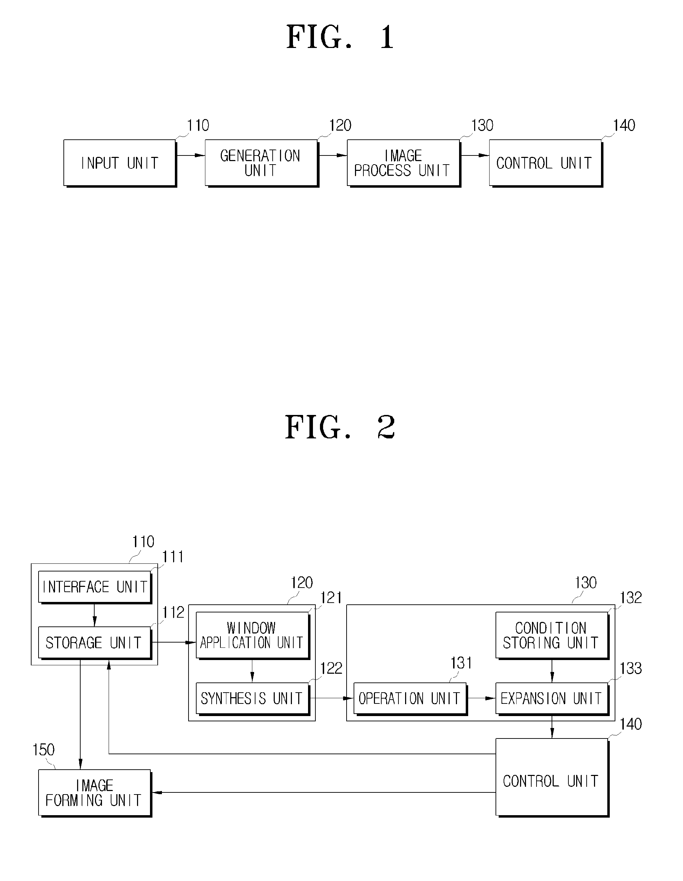

Figure 1 is a block diagram of an image forming device according to an embodiment of the present invention.

In Figure 1, the image forming device comprises an input unit 110, a generation unit 120, an image process unit 130 and a control unit 140.

While not shown, it is to be understood that the apparatus can include additional capabilities, such as copying, faxing and/or scanning in other aspects of the invention.

Binary data for each colour are input in the input unit 110. A video controller (not shown) of the image receives an 8-bit colour image of cyan (C), magenta (M), yellow (Y) and black (K) and performs a halftone process, to generate the each colour binary data. The input unit 110 receives the binary data for each colour that has undergone the halftone process. Specifically, the binary data for each colour may be the binary data for C, M, Y and K colours. While the image forming device is described in the context of C, M, Y, and K colours, it is to be understood that other colours and/or other numbers of colours can be used.

The generation unit 120 applies a window of a predetermined size to the colour binary data for each colour. Thereafter, the generation unit 120 generates a synthesis window by synthesizing each window region. Specifically, the generation unit 120 applies the window, which can be represented as n x m (width x length) to each of the C, M, Y and K binary data. Thereafter, the generation unit 120 generates the synthesis window displaying all pixels that are within each window in an OR-type manner. For instance, corresponding binary image data for each colour is combined using an 'OR' function, to produce the synthesis window.

The image process unit 130 applies a plurality of sub windows to the generated synthesis window to determine the directionality of an image or image features existing in the synthesis window. Further, the image process unit 130 performs an operation of expanding or adding data to the image along the determined directionality. The sub windows can be set in the position and size to most effectively indicate the directionality of the image included in the single synthesis window. For example, when the synthesis window has the size of n x m, the sub windows may be set to have the size of (n-a) x (m-b) and to be positioned at each corner region. In this case, two sub windows crossing a center region of the synthesis window lengthwise and widthwise may be additionally applied, in addition to four sub windows each positioned in each corner region. However, it is to be understood that other locations and/or numbers of sub windows can be used.

The image process unit 130 determines the directionality of the image within the synthesis window, by checking the number of pixels existing within each sub window and the distribution of the pixels. Accordingly, when it is determined that the image, or an image feature such as a contour or edge, is formed in a desired direction and when there is any deficient region in the direction of the image, the image process unit 130 expands the image by adding pixels to the deficient region.

The control unit 140 detects an edge region of the image expanded by the image process unit 130. When the deficient region of the image is filled by the image process unit 130, the edge region of the image can become smooth. Accordingly, the control unit 140 extracts the edge region from the binary data of each colour and performs a process of reinforcing or deleting the dots belonging to the edge region based on the binary data of each colour.

Specifically, the control unit 140 performs the process of reinforcing K colour dots in the edge region extracted from the K colour binary data and performs the process of deleting C, M and Y colour dots in the edge region extracted from the C, M and Y colour binary data. When the image is formed using binary data of each colour processed in the above-described manner, dots of various colours are prevented from being prominently displayed in the edge region of the black text, and the boundary of the black text is clearly processed to improve the degree of definition.

Figure 2 is a block diagram illustrating, in more detail, an example of the constitution of the image forming device of Figure 1. In Figure 2, the image forming device further comprises an image forming unit 150. In Figure 2, one image forming unit 150 is illustrated for clarity. However, the image forming unit may comprise various types of components, such as four photosensitive units and transfer units, an intermediate transfer belt, and the like.

While not required in all aspects, the shown input unit 110 includes an interface unit 111 and a storage unit 112. The interface unit 111 receives binary data of each colour being input from the video controller (not show) and stores the binary data in the storage unit 112.

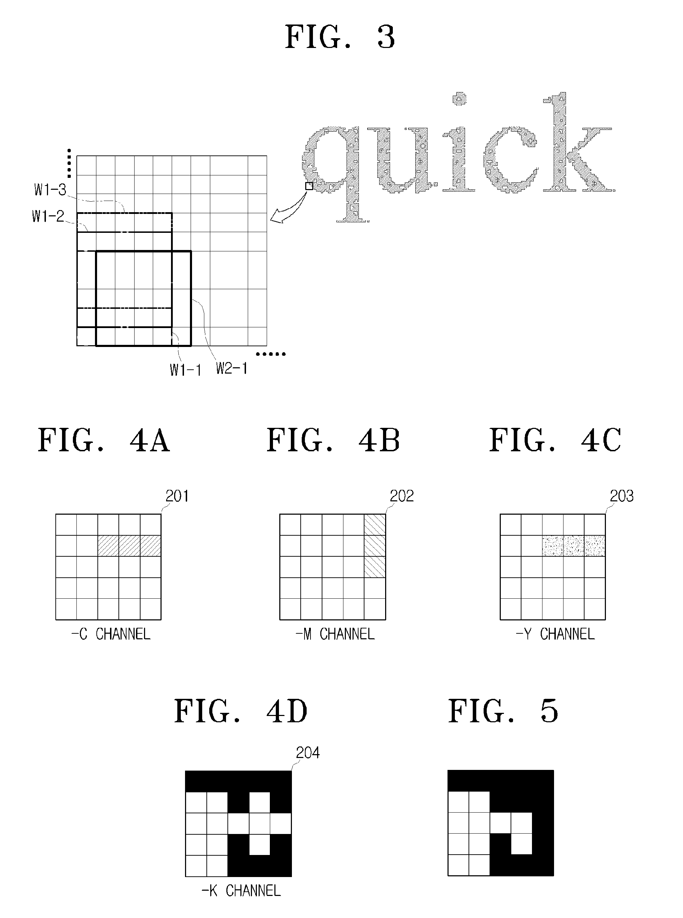

The generation unit 120 includes a window application unit 121 and a synthesis unit 122. The window application unit 121 applies a window to each of the colour binary data. A process of applying the window will be described with reference to Figure 3 and FIGS. 4A - 4D.

In Figure 3, the window application unit 121 applies the window to one side of the colour binary data. The window application unit 121 has each pixel of the colour binary data as a target pixel and applies the window, which is n x m in size (wherein, n and m are any natural numbers), to the target pixel. In Figure 3, a window of a 5 x 5 size is applied by way of example. That is, after one window W1-1 is applied to one side of the colour binary data "quick", subsequent windows W1-2, W1-3, ..., W2-1, ... are sequentially applied.

FIGS. 4A to 4D are a schematic views illustrating an example of the result of applying the window to the C, M, Y and K colour binary data, respectively. In Figure 4, when one window is applied at the same position of the C, M, Y and K colour binary data 201, 202, 203 and 204, three dots for each of C, M and Y colours are included in each of the C, M and Y colour binary data 201, 202 and 203 (FIGS. 4A to 4C, respectively), and twelve dots for K colour are included in the K colour binary data 204 (Figure 4D).

When the window for binary data for each colour is obtained, the synthesis unit 122 synthesizes the obtained windows, in an OR-type manner, to generate a synthesis window displaying all pixels existing within each window as shown, for example, in Figure 5. That is, when all windows illustrated in FIGS. 4A to 4D are synthesized, the synthesis window of Figure 5 is produced.

The image process unit 130 includes an operation unit 131, a condition storing unit 132 and an expansion unit 133. The operation unit 131 applies a plurality of sub windows to the synthesis window and calculates a characteristic value representing the characteristic of the image existing within the sub windows. The size, position, shape and the like of the sub window may be determined by a manufacturer or a user, considering the size and shape and the like of the synthesis window.

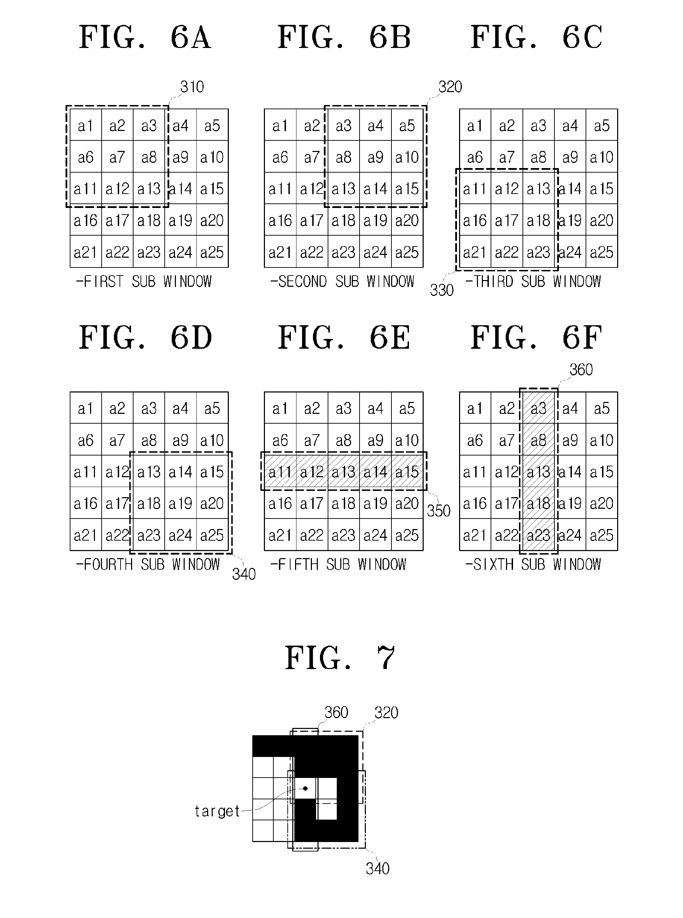

FIGS. 6A to 6F are schematic view of example of the sub windows. In FIGS. 6A to 6F, the operation unit 131 applies a total of six sub windows. That is, when the 5 x 5 synthesis window is generated, the number of dots included within the synthesis window totals twenty-five. Accordingly, the size of the sub window in use may be set to be below 5 x 5 in size.

In Figure 6A, a first sub window 310 is formed in a regular square which is positioned at the upper left corner of the synthesis window (relative to the drawing) and which is 3 x 3 in size. A second sub window 320 (Figure 6B), a third sub window 330 (Figure 6C) and a fourth sub window 340 (Figure 6D) are respectively positioned at the upper right corner, the lower left corner and the lower right corner of the synthesis window and have the same shape and same size as those of the first sub window 310.

In addition, a fifth sub window 350 (Figure 6E) and a sixth sub window 360 (Figure 6F) may be used together. The fifth sub window 350 crosses the center point of the synthesis window. That is, the dot a13 corresponding to the target pixel, lengthwise and is 1 x 5 in size. The sixth sub window 360 crosses the center point of the synthesis window widthwise and is 5 x 1 in size.

The operation unit 131 calculates the characteristic values of the sub windows 310, 320, 330, 340, 350 and 360 independently, considering the number of pixels existing within the sub windows 310, 320, 330, 340, 350 and 360 or the distribution of the pixels. When the number of the pixels existing within one of the first, second, third and fourth sub windows 310, 320, 330 and 340 is at or above a threshold number of pixels, the characteristic value of that sub window is calculated as '1'. If the number of pixels is not above the threshold number, the characteristic values of that sub window is calculated as '0'.

When pixels exist on both sides of the center pixel in sub window 350 or 360, the characteristic values of that sub window 350 and 360 is calculated as '1'. When pixels do not exist at either side of the center pixel in sub window 350 or 360, the characteristic value of that sub window 350 and 360 is calculated as '0'. That is, the method of calculating the characteristic values of the first, second, third, fourth, fifth and sixth sub windows 310, 320, 330, 340, 350 and 360 are represented in the following formula:

Formula 1

If the number of pixels within the first sub window $\geq$ Th, then C1=1, else C1=0

If the number of pixels within the second sub window $\geq$ Th, then C2=1, else C2=0

If the number of pixels within the third sub window $\geq$ Th, then C3=1, else C3=0

If the number of pixels within the fourth sub window $\geq$ Th, then C4=1, else C4=0

If (a11 or a12) and (a14 or a15) = 1, then C5=1, else C5=0

If (a3 or a8) and (a18 or a23) = 1, then C6=1, else C6=0

In the Formula 1, "C1" through "C6" respectively refer to the characteristic values of the first, second, third, fourth, fifth and sixth sub windows. The value "Th" refers to the threshold number of pixels, which can be user-selected.

When the characteristic values for the sub windows 310, 320, 330, 340, 350 and 360 have been obtained by the operation unit 131, the expansion unit 133 verifies whether conditions for expansion stored in the condition storing unit 132 are satisfied. The conditions for expansion of the image region are represented in the following formula:

$$\text{Formula } 2$$

$$C1 \ \& \ C2 \ \& \ C3 = 1$$
$$C3 \ \& \ C4 \ \& \ C5 = 1$$
$$C1 \ \& \ C3 \ \& \ C6 = 1$$
$$C2 \ \& \ C4 \ \& \ C6 = 1$$
$$C1 \ \& \ C4 = 1$$
$$C2 \ \& \ C3 = 1$$

When any one of the conditions in the above-described formula 2 is satisfied, the expansion unit 133 expands the image region to the target pixel. If none of the conditions for expansion are satisfied, the expansion unit 133 does not expand the image region to the target pixel.

Figure 7 is a schematic view for explaining a process of applying each sub window to the synthesis window of Figure 5. A process of expanding the image region in the synthesis window of Figure 5 will be described, assuming that Th is '5'. When the first sub window 310 is applied to the synthesis window of Figure 5, four pixels exist within the first sub window 310. Therefore, since the number of the pixels existing within the first sub window 310 is below '5', the characteristic value of the first sub window 310 is '0'.

Next, since seven pixels exist within the second sub window 320, the characteristic value of the second sub window 320 is '1'. Likewise, the characteristic value of the third sub window 330 is '0', and the characteristic value of the fourth sub window 340 is '1'.

Next, in the fifth sub window 350, since no pixels exist at the positions of a11 and a12, the characteristic value thereof is '0'. However, in the sixth sub window 360, since the pixels exist in all positions a3, a8, a18 and a23, the characteristic value thereof is '1'.

Figure 7 illustrates only the sub windows with the characteristic value '1,' that is, the second, fourth and sixth sub windows 320, 340 and 360. Accordingly, the condition of C2 & C4 & C6 = 1 is satisfied. Since this is the fourth condition of the above-described Formula 2, the expansion unit 133 decides the expansion to the target pixel.

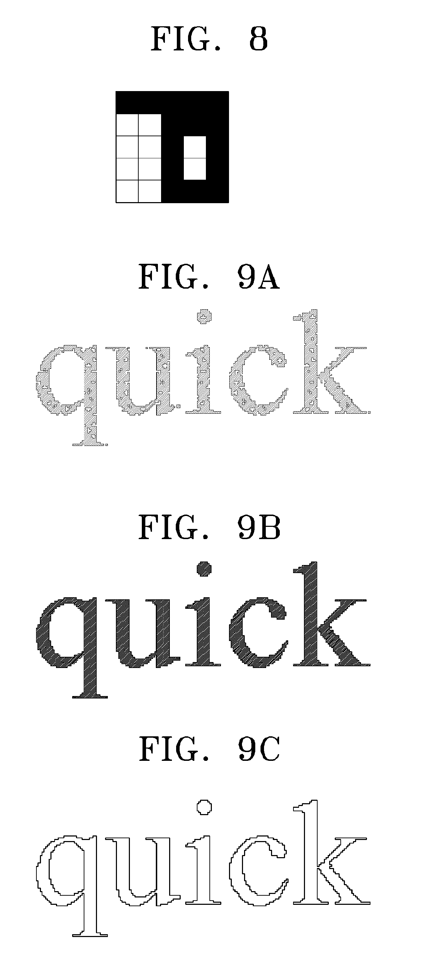

Figure 8 illustrates a state of the image expanded to the target pixel by the expansion unit 133. In this manner, whether or not to expand to the target pixel included in each window is determined depending on the directionality of the pixels around the target pixel. Consequently, the deficient region inside the image or the edge region is filled.

The control unit 140 detects the edge region of the expanded image. An algorithm of detecting an edge region is well known. Thereafter, the control unit 140 extracts dots positioned in the edge region from binary data of each colour stored in the storage unit 112, to perform the process of reinforcing or deleting dots.

Accordingly, the control unit 140 controls the image forming unit 150 to perform a process of forming an image by using binary data of each colour with the processed edge region. The image forming unit 150 is capable of displaying the binary data of each colour as an image through a plurality of photosensitive units and transfer units and the like.

The control unit 140 is capable of additionally performing a process of determining whether the pertinent image is a black text or a colour text, based on the number of K colour dots existing in the detected edge region.

That is, in the case of black text, the control unit 140 clarifies the boundary by reinforcing the K colour and deleting the other colours in the edge region and then prints the image through the image forming unit 150.

In the case of the colour text, since the colours are naturally displayed in the edge region, the control unit 140 does not perform the reinforcing or deleting process. The control unit 140 controls the image forming unit 150 to form the image by using the binary data of each colour stored in the storage unit 112.

FIGS. 9A through 9C are schematic views showing how a shape of an image may be changed in the process of detecting the edge region by expanding the image. In Figure 9A, the binary data corresponding to one colour is indicated. In the colour binary data of Figure 9A, it is noted that some deficient regions exist in the region forming the image.

Next, Figure 9B illustrates the image after being expanded by the image process unit 130. As illustrated in Figure 9B, most of the deficient regions are filled as the image is expanded, to clarify the edge region. When the edge region is derived in this state, a clear edge region is obtained as shown in Figure 9C. The control unit 140 applies the obtained edge region to the binary data of each colour, to reinforce the K colour dots and to delete the C, M and Y colour dots in the edge region part. Thereby, colours other than black are prevented from being displayed around the boundary of black text.

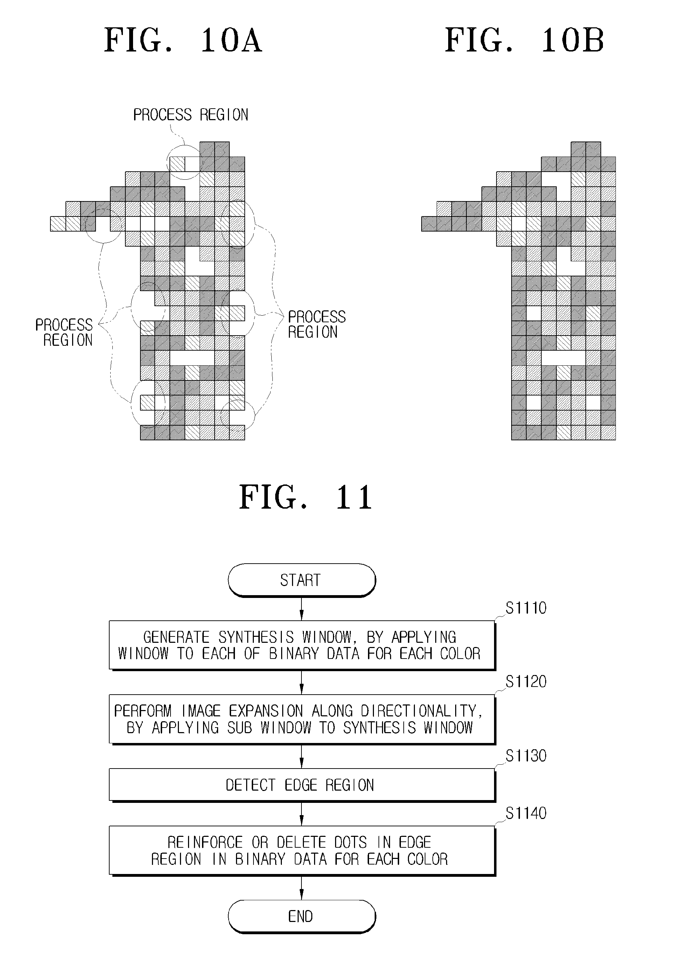

FIGS. 10A and 10B are a schematic before and after views of text with a processed edge region. In Figure 10A, before the edge region of the text is processed, different colours are displayed in many of the edge regions, or deficient regions exist therein. However, when the control unit 140 performs the edge region process, the dots of various colours positioned in the edge region are deleted and the deleted region and deficient regions are reinforced by the K colour dots, so that the text with the clear boundary shown in Figure 10B is obtained. However, since the region finally processed by the control unit 140 corresponds to the edge region of the binary data of each colour, the internal region displays the original image by the superposition of the binary data of each colour. This is because colour disagreement is typically not noticeable in an internal region and becomes a noticeable problem only in the edge region. Therefore, colour superposition is performed in the internal region to reproduce the black region as it is, and the control unit 140 may process only the edge region.

Figure 11 is a flow chart describing an image forming method according to another embodiment of the present invention. In Figure 11, in operation S1110, a window is applied to the binary data for each colour, to generate a synthesis window. Since the method of processing the synthesis window is already described, in detail, with respect to FIGS. 3 through 5, no further description thereof will be presented.

In operation S1120, a plurality of sub windows are applied to the generated synthesis window, to expand an image according to the directionality of the image. Since the method of applying the sub windows and the method of expanding the image are already described, in detail, with respect to FIGS. 6A - F through Figure 8, no further description thereof will be presented.

In operation S1130, an edge region of the expanded image is detected. In operation S1140, dots positioned in the edge region are reinforced or deleted on the binary data for each colour accordingly.

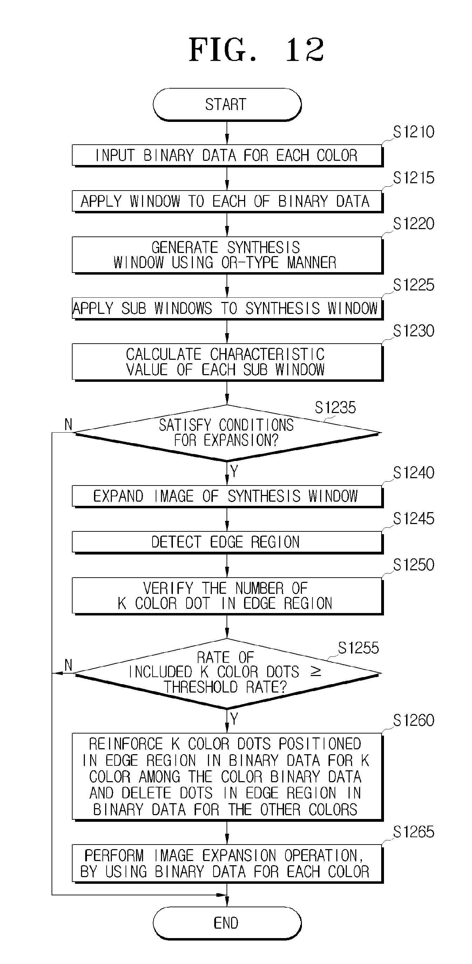

Figure 12 is a flow chart that describes, in more detail, the image forming method according to the embodiment of Figure 11. In Figure 12, in operation S1210, binary data for each colour are input in a video controller and the like. Unlike the conventional art, since the binary data not the 8-bit data are input according to an aspect of the invention, the use of memory is significantly reduced. Specifically, in the example used to describe the present embodiment, C, M, Y and K colour binary data are input.

In operation S1215, a window is applied to each of the binary data being input, and in operation S1220, a synthesis window is generated in an OR-type manner. In operation S1225, a plurality of sub windows are applied to the generated synthesis window. In operation S1230, a characteristic value of each sub window is calculated. The characteristic value of each sub window can be calculated through Formula 1 described above according to an aspect of the invention, but can be otherwise defined.

When the characteristic value has been calculated, in operation S1235, it is determined whether the calculated characteristic value satisfies conditions for expansion. For example, the conditions for expansion may be those represented in Formula 2, described above. If the calculated value does not satisfy the condition for expansion, the method with respect to the generated synthesis window is ended.

If the conditions for expansion are satisfied, in operation S1240, the image of the synthesis window is expanded, to fill a deficient region positioned in the edge region and the like of the image.

In operation S1245, the edge region of the expanded image is detected, and in operation S1250, the number of K colour dots in the edge region is verified. In operation S1255, it is checked whether a rate of the verified number of K colour dots is at or above a predetermined threshold rate. When the number of K colour dots is at or above the threshold rate, the image is considered as a black text, and when the rate of K colour dots is below the threshold rate, the image is considered as a colour text. For example, when the threshold rate is predetermined as 70%, the total number of dots positioned in the edge region is 100, and the number of K colour dots is 70 or above, the image is recognized as the black text. However, when the number of K colour dots is below 70, the image is recognized as the colour text.

Therefore, when the image is recognized as the colour text, any additional process is not performed with respect to the binary data of each colour being input and stored, so that the binary data of each colour are maintained as they are.

However, when the image is recognized as the black text (that is, when the rate of the K colour dots included is at or above the threshold rate) in operation S1260, the K colour is reinforced and the other colours are deleted in the edge region. In operation S1265, an image forming process is performed by using the binary data of each colour to reinforce or delete colour dots of each edge region accordingly. Consequently, the boundary of the black text becomes clearly defined and any other colours are prevented from being prominently displayed in the boundary.

As described above, in accordance with the image forming device and method of the embodiments of the present invention, even though a colour disagreement may occur, the edge region can be processed using software, to prevent the quality of an image from deteriorating due to a colour disagreement. Specifically, the boundary of a composite black text displayed by the superposition of various colours can be processed to be clearer. Furthermore, in accordance with the image forming device and method, since the edge region is processed using the binary data for each colour, a low capacity memory can be used for the processing of the edge region.

Although a few embodiments of the present invention have been shown and described, it would be appreciated by those skilled in the art that changes may be made in this embodiment without departing from the principles of the invention, the scope of which is defined in the claims.

## Claims

1. An image processing device, comprising:

   means for receiving image data corresponding to an image to be printed, the image data including data corresponding to one or more colours;
   means arranged to remove, from the image data, data corresponding to a first colour associated with an edge region of the image; and
   means arranged to insert, into a portion of the image data corresponding to the edge region, data corresponding to a second colour.

2. A device according to claim 1, wherein the first colour comprises a colour other than black and wherein the second colour comprises black.

3. A device according to claim 1 or 2, wherein:

   the receiving means comprises an input unit to receive the image data as binary image data for each colour being input; further comprising:

      a generation unit to generate a synthesis window, by applying a window of a predetermined size to each of the received binary data for each colour and synthesizing each window region; and
      an image process unit to conditionally expand an image within the synthesis window along a directionality of the image existing within the synthesis window, by applying a plurality of sub windows to the synthesis window; wherein said removing and inserting means comprise:

         a control unit to detect an edge region of the expanded image, extract dots corresponding to the edge region from the binary data for each colour, and carry out reinforcement or deletion of the dots corresponding to the edge region.

4. A device according to claim 3, further comprising an image forming unit to perform an image forming operation by using each of the binary data for each colour in which the dots corresponding to the edge region are reinforced or deleted.

5. A device according to claim 3 or 4, wherein the generation unit comprises:

   a window application unit to have each pixel constituting each of the binary data for each colour as a target pixel and apply a window of n x m in size, wherein n and m are any natural numbers, to the target pixel; and
   a synthesis unit to synthesize windows of the binary data for each colour in an OR-type manner, and to generate an synthesis window to display all pixels existing within each window of the binary data for each colour.

6. A device according to claim 3, 4 or 5, wherein the image process unit comprises:

   an operation unit to calculate a characteristic value for each of the sub windows representing the characteristic of an image existing within each of the sub windows, by applying each of the sub windows to the synthesis window;
   a condition storing unit to store conditions for expansion, considering the directionality depending on the characteristic value; and
   an expansion unit to expand the image by adding pixels in the target pixel region when it is determined that the calculated characteristic value satisfies the conditions for expansion.

7. A device according to claim 6, wherein the operation unit applies first, second, third and fourth sub windows respectively positioned at each corner region of the synthesis window, a fifth sub window crossing the center of the synthesis window widthwise, and a sixth sub window crossing the center of the synthesis window lengthwise;

wherein, when the number of pixels existing in one of the first, second, third and fourth sub windows is at or above a predetermined threshold number of pixels, the operation unit calculates the characteristic value of the one of the first, second, third and fourth sub windows as '1', and when the number of pixels existing in the one of the first, second, third and fourth sub windows is below the predetermined threshold number of pixels, the operation unit calculates the characteristic value of the one of the first, second, third and fourth sub windows as '0'; and

when pixels exist at both sides of the center pixel in one of the fifth and sixth sub windows, the operation unit calculates the characteristic value of the one of the fifth and sixth sub windows as '1', and when pixel is absent at one or both sides of the center pixel in the one of the fifth and sixth sub windows, the operation unit calculates the characteristic value of the one of the fifth and sixth sub windows as '0'.

8. A device according to claim 7, wherein the condition storing unit stores the conditions for expansion as follows:

1) C1 & C2 & C3 = 1
2) C3 & C4 & C5 = 1
3) C1 & C3 & C6 = 1
4) C2 & C4 & C6 = 1
5) C1 & C4 = 1
6) C2 & C3 = 1

wherein C1, C2, C3, C4, C5 and C6, respectively, are the characteristic values of the first, second, third, fourth, fifth and sixth sub windows.

9. A device according to claim 6, 7 or 8, wherein the characteristic value represents the number of pixels existing within the sub window or the distribution of the pixels existing therein.

10. A device according to any one of claims 6 to 9, wherein the expansion unit does not add pixels in the target pixel region when it is determined that the calculated characteristic value does not satisfy the conditions for expansion.

11. A device according to any preceding claim, wherein the binary data for each colour include C, M, Y and K colour binary data; and

only when a rate of K colour dots included in the edge region is at or above a predetermined threshold rate, the control unit reinforces the dots positioned at the edge region on the K colour binary data and deletes the dots positioned at the edge region on the C, M and Y colour binary data.

12. A printer comprising the image processing device of any one of the preceding claims.

13. An image forming device, comprising:

an image process unit to conditionally expand an image, within an applied synthesis window of received colour binary data, according to a detected directionality of the image; and
a control unit to detect an edge region of the expanded image, extract dots corresponding to the edge region from the colour binary data and carry out reinforcement or deletion of the dots corresponding to the edge region.

14. The image forming device according to claim 13, wherein the colour binary data comprises C, M, Y and K colour binary data, and wherein when a rate of K colour dots included in the edge region is at or above a predetermined threshold rate, the control unit reinforces the dots positioned at the edge region on the K colour binary data and deletes the dots positioned at the edge region on the C, M and Y colour binary data.

15. A method of processing image data corresponding to an image to be printed, the image data including data corresponding to one or more colours, the method comprising:

removing, from the image data, data corresponding to a first colour associated with an edge region of the image; and
inserting, into a portion of the image data corresponding to the edge region, data corresponding to a second colour.

**16.** A method according to claim 15, further comprising:

generating a synthesis window by applying a window of a predetermined size to each of binary data for each colour and synthesizing each window region;

conditionally expanding an image along a directionality of the image existing in the synthesis window by applying a plurality of sub windows to the generated synthesis window; and

detecting an edge region of the expanded image, wherein the steps of removing data corresponding to a first colour and inserting data corresponding to a second colour comprise extracting dots positioned in the edge region from the binary data for each colour and carrying out reinforcement or deletion of the extracted dots.

**17.** A method according to claim 16, further comprising performing an image forming operation by using each of the binary data for each colour in which the dots positioned in the edge region are reinforced or deleted.

**18.** A method according to claim 16 or 17, wherein the generating comprises:

selecting each pixel constituting each of the binary data for each colour as a target pixel, and applying a window of n x m in size, wherein n and m are any natural numbers, to the target pixel; and

synthesizing windows of the binary data for each colour, in an OR-type manner, and generating a synthesis window that displays all pixels existing within each window.

**19.** A method according to claim 16, 17 or 18, wherein the conditional expanding comprises:

calculating a characteristic value representing the characteristic of an image existing within the sub windows by applying the sub windows to the synthesis window; and

expanding the image by adding pixels to the target pixel region when it is determined that the calculated characteristic value satisfies one of the conditions for expansion considering the directionality depending on the characteristic value.

**20.** A method according to claim 19, wherein the calculating of the characteristic value comprises:

applying first, second, third and fourth sub windows respectively positioned at each corner region of the synthesis window, a fifth sub window crossing a center of the synthesis window widthwise, and a sixth sub window crossing the center of the synthesis window lengthwise;

calculating a characteristic value for each sub window, wherein, for the first, second, third and fourth sub windows, the characteristic value of a sub window is '1' when the number of pixels existing in the sub window is at or above a predetermined threshold number, and the characteristic value of the sub window is '0' when the number of pixels existing in the sub window is below the predetermined threshold number of pixels; and wherein, for the fifth and sixth sub windows, the characteristic value of a sub window is '1' when pixels exist at both sides of the center pixel in the sub window, and the characteristic value of is '0' when all pixels are absent at one or both sides of the center pixel of the sub window.

**21.** A method according to claim 20, wherein the conditions for expansion are as follows:

1) C1 & C2 & C3 = 1
2) C3 & C4 & C5 = 1
3) C1 & C3 & C6 = 1
4) C2 & C4 & C6 = 1
5) C1 & C4 = 1
6) C2 & C3 = 1

wherein C1, C2, C3, C4, C5 and C6, respectively, are the characteristic values of the first, second, third, fourth, fifth and sixth sub windows.

**22.** A method according to claim 19, 20 or 21, wherein the characteristic value represents the number of pixels existing within the sub window or the distribution of the pixels existing therein.

**23.** A method according to any one of claims 19 to 22, wherein the image is not expanded when it is determined that the calculated characteristic value does not satisfy one of the conditions for expansion.

24. A method according to any one of claims 16 to 23, wherein:

the generating comprises generating the synthesis window by applying a window of a size of 5x5 pixels to each of the binary data for each colour; and
the expanding comprises applying first, second, third and fourth sub windows which are respectively 3x3 in size and positioned at each corner region of the generated 5x5 synthesis window, a fifth sub window, which is 1x5 in size and crosses a center of the synthesis window widthwise, and a sixth sub window, which is 5x1 in size and crosses the center of the synthesis window lengthwise.

25. A method according to any one of claims 16 to 24,

wherein the binary data for each colour includes C, M, Y and K colour binary data; and
wherein, when a rate of K colour dots included in the edge region is at or above a predetermined threshold rate, the detecting comprises reinforcing the dots positioned at the edge region on the K colour binary data and deleting the dots positioned at the edge region on the C, M and Y colour binary data.

# FIG. 1

```
┌──────────┐ 110  ┌────────────┐ 120  ┌────────────┐ 130  ┌────────────┐ 140
│INPUT UNIT│─────▶│ GENERATION │─────▶│   IMAGE    │─────▶│CONTROL UNIT│
│          │      │    UNIT    │      │PROCESS UNIT│      │            │
└──────────┘      └────────────┘      └────────────┘      └────────────┘
```

# FIG. 2

# FIG. 3

# FIG. 4A

# FIG. 4B

# FIG. 4C

-C CHANNEL

-M CHANNEL

-Y CHANNEL

# FIG. 4D

# FIG. 5

-K CHANNEL

# FIG. 6A

310

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

-FIRST SUB WINDOW

# FIG. 6B

320

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

-SECOND SUB WINDOW

# FIG. 6C

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

330

-THIRD SUB WINDOW

# FIG. 6D

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

-FOURTH SUB WINDOW

340

# FIG. 6E

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

350

-FIFTH SUB WINDOW

# FIG. 6F

360

| a1 | a2 | a3 | a4 | a5 |
|----|----|----|----|----|
| a6 | a7 | a8 | a9 | a10 |
| a11 | a12 | a13 | a14 | a15 |
| a16 | a17 | a18 | a19 | a20 |
| a21 | a22 | a23 | a24 | a25 |

-SIXTH SUB WINDOW

# FIG. 7

360   320

target

340

# FIG. 8

# FIG. 9A

# FIG. 9B

# FIG. 9C

# FIG. 10A    FIG. 10B

PROCESS REGION

PROCESS
REGION

PROCESS
REGION

# FIG. 11

START

GENERATE SYNTHESIS WINDOW, BY APPLYING
WINDOW TO EACH OF BINARY DATA FOR EACH COLOR

S1110

PERFORM IMAGE EXPANSION ALONG DIRECTIONALITY,
BY APPLYING SUB WINDOW TO SYNTHESIS WINDOW

S1120

DETECT EDGE REGION

S1130

REINFORCE OR DELETE DOTS IN EDGE
REGION IN BINARY DATA FOR EACH COLOR

S1140

END

# FIG. 12

START

S1210
INPUT BINARY DATA FOR EACH COLOR

S1215
APPLY WINDOW TO EACH OF BINARY DATA

S1220
GENERATE SYNTHESIS
WINDOW USING OR-TYPE MANNER

S1225
APPLY SUB WINDOWS TO SYNTHESIS WINDOW

S1230
CALCULATE CHARACTERISTIC
VALUE OF EACH SUB WINDOW

S1235
SATISFY CONDITIONS
FOR EXPANSION?
N

Y

S1240
EXPAND IMAGE OF SYNTHESIS WINDOW

S1245
DETECT EDGE REGION

S1250
VERIFY THE NUMBER OF
K COLOR DOT IN EDGE REGION

S1255
RATE OF
INCLUDED K COLOR DOTS ≥
THRESHOLD RATE?
N

Y

S1260
REINFORCE K COLOR DOTS POSITIONED
IN EDGE REGION IN BINARY DATA FOR K
COLOR AMONG THE COLOR BINARY DATA
AND DELETE DOTS IN EDGE REGION IN
BINARY DATA FOR THE OTHER COLORS

S1265
PERFORM IMAGE EXPANSION OPERATION,
BY USING BINARY DATA FOR EACH COLOR

END